# EUROPEAN PATENT APPLICATION

(11) **EP 4 622 291 A1**
(43) Date of publication of application: **24.09.2025**
(21) Application number: 23947331.7
(22) Date of filing: 10.11.2023
(51) Int. Cl.: H04R 1/10

(54) **CORE MODULE AND EARPHONE**

(30) Priority: 28.07.2023 CN 202310956970
(71) Applicant: Shenzhen Shokz Co., Ltd., Shenzhen, Guangdong 518108 (CN)
(72) Inventor: ZHENG, Zeying, Shenzhen, Guangdong 518108 (CN); LI, Yongjian, Shenzhen, Guangdong 518108 (CN); XU, Jiang, Shenzhen, Guangdong 518108 (CN); JI, Ao, Shenzhen, Guangdong 518108 (CN)
(74) Representative: Wang, Bo
(86) International application number: PCT/CN2023/131093
(87) International publication number: WO 2025/025393

(57) **Abstract**

A core module (1) and an earphone (100). The core module (1) comprises: a housing assembly (10), a battery assembly (20), and a driving assembly (30), wherein a first accommodating space (12Ia) and a second accommodating space (122a) are formed in the housing assembly (10); the battery assembly (20) is accommodated in the first accommodating space (12Ia) in a first preset assembly direction (Z1), and the driving assembly (30) is accommodated in the second accommodating space (122a) in a second preset assembly direction (Z2), the first preset assembly direction (Z1) being set at an acute angle relative to the second preset assembly direction (Z2); and a first limiting portion (1211) is provided in the first accommodating space (121a), the projections of the first limiting portion (1211) and the battery assembly (20) on the cross-section perpendicular to the first preset assembly direction (Z1) do not overlap each other, and the first limiting portion (1211) is used for limiting the battery assembly (20). In this way, the stability of connection between the battery assembly (20) and the housing assembly (10) can be effectively improved, thereby effectively preventing the battery assembly (20) and the housing assembly (10) from moving relative to each other and exacerbating the vibration of the earphone (100) during operation, thus effectively improving the sound quality of the earphone (100).

## Description

### TECHNICAL FIELD

The present disclosure relates to the technical field of electronic equipment, and in particular to core modules and earphones.

### BACKGROUND

With the increasing popularity of electronic devices, electronic devices have become indispensable tools for social interaction and entertainment in people's daily lives, leading to increasingly higher demands for their performance. Devices such as earphones and smart glasses are now extensively used in everyday scenarios, often paired with mobile phones, computers, and other terminal devices to deliver an immersive auditory experience. Therefore, improving the sound quality of earphones and similar electronic devices has become a pressing issue that needs to be addressed.

### SUMMARY

One embodiment of the present disclosure provides a core module, comprising: a housing, a battery assembly, and a driving assembly. The housing may be provided with a first accommodation space and a second accommodation space. The battery assembly may be accommodated in the first accommodation space along a first preset assembly direction. The driving assembly may be accommodated in the second accommodation space along a second preset assembly direction. The first preset assembly direction and the second preset assembly direction may be provided at an acute angle. A first limiting portion may be disposed in the first accommodation space. A projection of the first limiting portion on a cross section perpendicular to the first preset assembly direction may not overlap with a projection of the battery assembly on the cross section perpendicular to the first preset assembly direction. The first limiting portion may be configured to limit a position of the battery assembly.

In some embodiments, the first limiting portion is configured to stop the battery assembly at least in a direction perpendicular to the first preset assembly direction to limit rotation of the battery assembly around the first preset assembly direction.

In some embodiments, the battery assembly has a thickness direction, and an angle between the first preset assembly direction and the thickness direction of the battery assembly is in a range of 0°-5°.

In some embodiments, the battery assembly includes a top wall surface and a bottom wall surface which are spaced apart along the thickness direction and a peripheral wall surface connecting the top wall surface and the bottom wall surface. The first limiting portion may be configured to abut against the peripheral wall surface of the battery assembly for stopping.

In some embodiments, the first accommodation space includes a second limiting portion. The second limiting portion may be configured to limit movement of the battery assembly along a radial direction of the battery assembly.

In some embodiments, the first accommodation space includes a first inner sidewall. The second limiting portion may be a portion of the first inner sidewall, and/or the second limiting portion may be a limiting protrusion disposed on the first inner sidewall.

In some embodiments, a positioning portion is disposed in the first accommodation space. The positioning portion and the first limiting portion may be spaced apart. The battery assembly may be provided with a positioning protrusion, and the positioning protrusion may be disposed between the positioning portion and the first limiting portion along the first preset assembly direction, so that the positioning portion and the first limiting portion perform assembly positioning on the battery assembly when the battery assembly is assembled in the first accommodation space along the first preset assembly direction.

In some embodiments, the core module includes an electrode member electrically connected with the battery assembly. The electrode member may be disposed in the positioning portion and extend from the first accommodation space to outside of the housing.

In some embodiments, two positioning portions are provided, and the two positioning portions are respectively disposed on two sides of the first limiting portion, and the positioning protrusion is disposed between the first limiting portion and any one of the two positioning portions.

In some embodiments, the battery assembly leads a wire, the first accommodation space includes a first bottom wall, and a lead wire groove is disposed on the first bottom wall to accommodate the wire.

In some embodiments, the housing is provided with a partition wall. The partition wall may be configured to separate the first accommodation space and the second accommodation space. The first limiting portion may be convexly disposed on a side of the partition wall facing the first accommodation space.

In some embodiments, the housing includes a first shell and a second shell. The second shell may be provided with an open end. The first shell and the second shell may be connected with each other and the first shell may cover the open end to form the first accommodation space and the second accommodation space. The second shell may be provided with a plurality of positioning grooves. The first shell may be provided with a plurality of positioning columns corresponding to the plurality of positioning grooves. At least a portion of the plurality of positioning columns may be embedded in the plurality of positioning grooves. Notches of the plurality of positioning grooves may be provided with first inclined wall surfaces, and the first inclined wall surfaces may be configured to guide the plurality of positioning columns to be embedded into the plurality of positioning grooves.

In some embodiments, the plurality of positioning columns are configured to be formed along a first demolding direction of the first shell. The core module may comprise a circuit board, and the first demolding direction may be perpendicular to a plane where the circuit board is located.

In some embodiments, an angle between the first demolding direction and the first preset assembly direction is in a range of 0°-5°

In some embodiments, the first inclined wall surfaces are inclined compared to a second demolding direction and are biased toward the first demolding direction.

In some embodiments, the first shell is provided with a first support platform, and the plurality of positioning columns are disposed on the first support platform and extend outward from a bottom surface of the first support platform. The second shell may be provided with a second support platform, and the plurality of positioning groove may be disposed on the second support platform and form the notches on a top surface of the second support platform. When the at least a portion of the plurality of positioning columns are embedded in the plurality of positioning grooves, a first gap may be formed between the bottom surface of the first support platform and the top surface of the second support platform. A second gap may be provided between edges of the first shell and the second shell which are buckled with each other. A minimum gap height of the first gap may be less than a minimum gap height of the second gap, and the second gap may be configured to accommodate a fixing adhesive.

In some embodiments, a minimum gap distance of the first gap is in a range of 0.02-0.07 mm, and a minimum gap distance of the second gap is in a range of 0.08-0.12 mm.

One embodiment of the present disclosure provides an earphone comprising any core module described above and an ear hook configured to be connected with the housing to make the core module be worn near an ear canal of a user but not block the ear canal.

The beneficial effects of the present disclosure include the following content. The present disclosure provides the core module comprising the housing, the battery assembly, and the driving assembly. The housing is provided with the first accommodation space and the second accommodation space. The battery assembly is accommodated in the first accommodation space along the first preset assembly direction. The driving assembly is accommodated in the second accommodation space along the second preset assembly direction. The first preset assembly direction and the second preset assembly direction are provided at the acute angle. The first limiting portion is disposed in the first accommodation space. The projection of the first limiting portion on the cross section perpendicular to the first preset assembly direction does not overlap with the projection of the battery assembly on the cross section perpendicular to the first preset assembly direction. The first limiting portion is configured to limit the position of the battery assembly. Based on the above, the first limiting portion is arranged on one side of the battery assembly along the direction perpendicular to the first preset assembly direction. In this way, the first limiting portion abuts against the peripheral side wall of the battery assembly parallel to the first preset assembly direction (the specific descriptions of the peripheral wall surface can be found in the present disclosure below), so that the first limiting portion can effectively limit the movement of the battery assembly relative to the housing in a plane perpendicular to the first preset assembly direction, which effectively improves the stability of the connection between the battery assembly and the housing assembly, and effectively prevents aggravating the vibration of the earphone during operation caused by the relative movement of the battery assembly and the housing assembly, thereby effectively improving the sound quality of the earphone.

It is understood that the foregoing general description and the following detailed description are exemplary and explanatory only and are not intended to limit the present disclosure.

### BRIEF DESCRIPTION OF THE DRAWINGS

In order to more clearly illustrate the technical solutions of the embodiments of the present disclosure, the accompanying drawings required to be used in the description of the embodiments are briefly described below. Obviously, the accompanying drawings in the following description are only some examples or embodiments of the present disclosure, and it is possible for those having ordinary skills in the art to obtain other drawings in accordance with these drawings without creative labor.
FIG. 1 is a schematic diagram illustrating a front contour of an ear of a user;
FIG. 2 is a schematic diagram illustrating an overall structure of an earphone according to some embodiments of the present disclosure;
FIG. 3 is a schematic diagram illustrating a structure of a section A of the earphone in FIG. 2;
FIG. 4 is a schematic diagram illustrating a structure of a shell in FIG. 3;
FIG. 5 is a partial cross-sectional view of the earphone in FIG. 3 along a B-direction; and
FIG. 6 is a partial cross-sectional view of a portion C of the earphone in FIG. 3.

### DETAILED DESCRIPTION

The present disclosure is further described in detail below with reference to the accompanying drawings and embodiments. It is particularly noted that the following embodiments are only used to illustrate the present disclosure, but are not intended to limit the scope of the present disclosure. Similarly, the following embodiments are only some embodiments of the present disclosure rather than all embodiments, and all other embodiments obtained by those having ordinary skills in the art without creative labor are within the scope of protection of the present disclosure.

Reference to "embodiment" in the present disclosure means that a specific feature, structure, or characteristic described with reference to the embodiment may be included in at least one embodiment of the present disclosure. It is explicitly and implicitly understood by those skilled in the art that the embodiments described in the present disclosure may be combined with other embodiments.

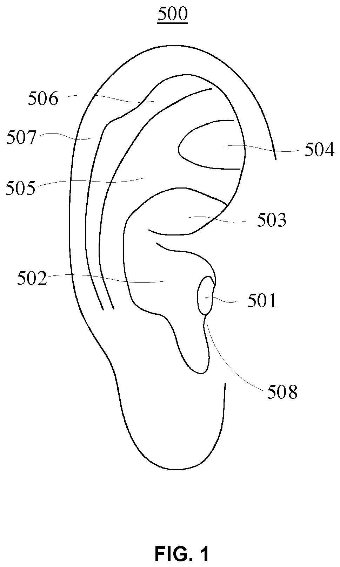

Referring to FIG. 1, an ear 100 of a user includes an external ear canal (i.e., ear canal) 501, a cavity of auricular concha 502, a cymba conchae 503, a triangular fossa 504, an antihelix 505, a scapha 506, a helix 507, a tragus 508, and other physiological parts. Although the external ear canal 501 has a certain depth and extends to an eardrum of the ear, for the ease of description and based on FIG. 1, the external ear canal 501 specifically refers to an entrance (i.e., an earhole) of the external ear canal 501 away from the eardrum unless otherwise specified in the present disclosure. Furthermore, the cavity of auricular concha 502, the cymba conchae 503, the triangular fossa 504, and other physiological parts have a certain volume and depth; and the cavity of auricular concha 502 is directly connected with the external ear canal 501, i.e., it can be simply regarded as that the earhole is located at a bottom of the cavity of auricular concha 502.

Furthermore, different users may have individual differences, resulting in different shapes, sizes, and other dimensional differences in the ears. For ease of description and to reduce (or even eliminate) the individual differences among different users, a simulator containing the head and (left and right) ears is prepared based on ANSI: S3.36, S3.25 and IEC: 60318-7 standards, such as GRAS 45BC KEMAR. Accordingly, in the present disclosure, descriptions such as "the user wears the earphone 100", "the earphone 100 is in a wearing state" and "in a wearing state" refer to the earphone 100 described in the present disclosure being worn on the ear of the simulator. Precisely because different users have individual differences, there may be certain differences between the earphone 100 worn by different users and the earphone 100 worn on the ear of the simulator, but such differences should be tolerated.

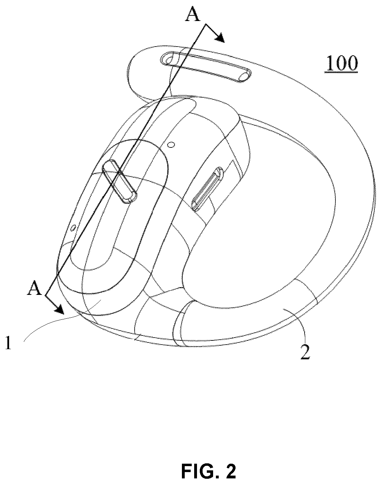

Referring to FIGs. 1-4, the earphone 100 may include a core module 1 and an ear hook 2. The core module 1 may include a housing assembly 10, a battery assembly 20, and a driving assembly 30. The ear hook 2 may be hook-shaped, and the earphone 100 may be worn, through the ear hook 2, at a position near an ear canal of an ear of a user but not blocking the ear canal. The ear hook 2 may be connected with the housing assembly 10 by snap-fitting with glue, or by threading. In a wearing state, the core module 1 may be located on a front side of the ear, and the ear hook 2 may be at least partially located on a rear side of the ear of the user, so that the earphone 100 is hung on the ear. In some embodiments, the housing assembly 10 is also referred to as a housing.

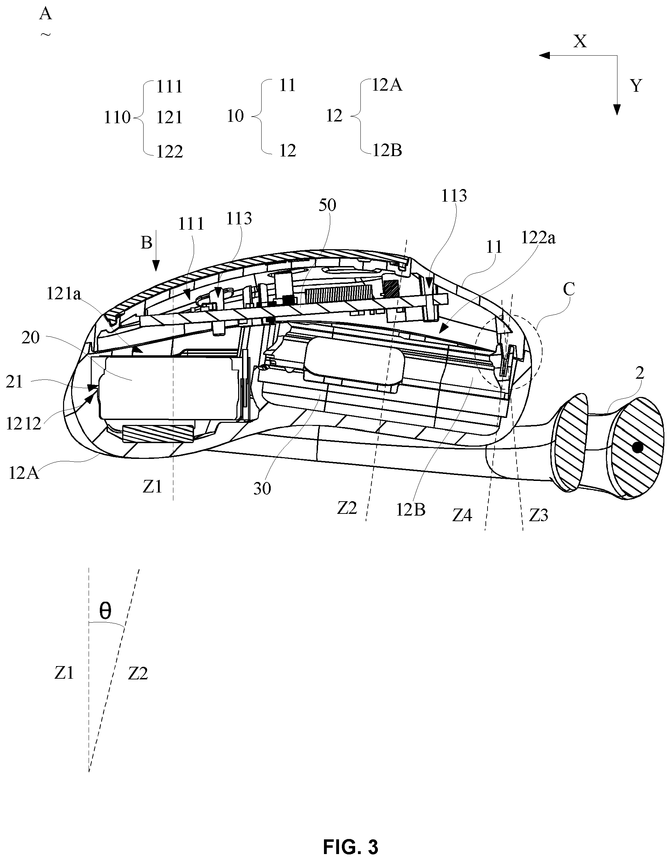

Referring to FIG. 3, FIG. 4, and FIG. 5, the housing assembly 10 may form an accommodation space, and the accommodation space may include a first accommodation space 121a and a second accommodation space 122a. The battery assembly 20 may be disposed along a first preset assembly direction Z1 and accommodated in the first accommodation space 121a, and the driving assembly 30 may be disposed along a second preset assembly direction Z2 and accommodated in the second accommodation space 122a. The driving assembly 30 may include a loudspeaker for providing an air-conducted sound to the external ear canal of the ear of the user. The battery assembly 20 may include a top wall surface and a bottom wall surface spaced apart in a thickness direction (not shown in the figure) and a peripheral wall surface 21 connecting the top wall and the bottom wall.

Specifically, in one embodiment, the housing assembly 10 includes a first shell 11 and a second shell 12, and the first shell 11 and the second shell 12 are connected with each other and buckled with each other to form the accommodation space (including the first accommodation space 121a and the second accommodation space 122a). The battery assembly 20 and the driving assembly 30 are respectively accommodated in the accommodation space. That is, the battery assembly 20 is accommodated in the first accommodation space 121a, and the driving assembly 30 is accommodated in the second accommodation space 122a.

The first preset assembly direction Z1 and the second preset assembly direction Z2 may be provided at an acute angle. In other words, an intersection angle θ of a projection of a positive direction of the second preset assembly direction Z2 in a reference plane and a projection of a positive direction of the first preset assembly direction Z1 in the reference plane may be an acute angle. In some embodiments, the reference plane is a plane parallel to or coplanar with a plane where the first preset assembly direction Z1 and the second preset assembly direction Z2 are located. In some embodiments, the reference plane is an XY-plane formed by an X-direction and a Y-direction as shown in FIG. 3, i.e., a plane formed by a long axis direction and a thickness direction of the core module 1. Optionally, the intersection angle of the projection of the positive direction of the second preset assembly direction Z2 in the reference plane and the projection of the positive direction of the first preset assembly direction Z1 in the reference plane is located on a side of the housing facing the ear of the user. In one embodiment, the intersection angle θ between the projection of the positive direction of the second preset assembly direction Z2 in the reference plane and the projection of the positive direction of the first preset assembly direction Z1 in the reference plane is in a range of 10°-14° or in a range of 11-14°. For example, the intersection angle θ is 10°, 10.5°, 11°, 11.5°, 12°, 12.5°, 13°, 13.5°, or 14°. In this case, a tilt degree of the driving component 30 relative to the battery assembly 20 is large, and a length of a projection of the driving component 30 in a first direction X is reduced, which facilitates reducing a length of the housing component 10 in the first direction X, reducing a volume of the core module, and making the earphone tend to miniaturize as a whole smaller, which is easier for the user to carry and wear, and improves user experience.

In some embodiments, referring to FIGs. 3-5, in some embodiments, a first limiting portion 1211 is provided in the first accommodation space 121a. A projection of the first limiting portion 1211 on a cross section perpendicular to the first preset assembly direction Z1 may not overlap with a projection of the battery assembly 20 on the cross section perpendicular to the first preset assembly direction Z1, and the first limiting portion 1211 may be configured to limit a position of the battery assembly 20. Specifically, the first limiting portion 1211 may be provided on a side of the battery assembly 20 along a direction perpendicular to the first preset assembly direction Z1, so that the first limiting portion 1211 may abut against the peripheral wall surface 21 of the battery assembly 20 parallel to the first preset assembly direction Z1. Accordingly, the first limiting portion 1211 can effectively limit the movement of the battery assembly 20 relative to the housing assembly 10 in a plane perpendicular to the first preset assembly direction Z1, which effectively improves the stability of the connection between the battery assembly 20 and the housing assembly 10, and effectively prevents the noise generated by the relative movement of the battery assembly 20 and the housing assembly 10 during operation of the earphone 100, thereby effectively improving the sound quality of the earphone 100 and improving the listening effect of the user.

In some embodiments, referring to FIG. 3, FIG. 4, and FIG. 5, the first limiting portion 1211 is configured at least to limit rotation of the battery assembly 20 around the first preset assembly direction Z1 in a plane perpendicular to the first preset assembly direction. For example, the peripheral wall surface 21 of the battery assembly 20 is parallel to the first preset assembly direction Z1 (or in some embodiments, an angle θ is formed between the peripheral wall surface 21 and the first preset assembly direction Z1, and the angle θ is in a range of 0°-5°), and a portion of the peripheral wall surface 21 protrudes in the direction perpendicular to the first preset assembly direction Z1 to form a limiting protrusion. Merely by way of example, when the battery assembly 20 is disposed in the first accommodation space 121a along the first preset assembly direction Z1, the limiting protrusion on the peripheral wall surface 21 abuts against the first limiting portion 1211 to effectively limit the rotation of the battery assembly 20 around the first preset assembly direction Z1, which effectively improves the stability of the connection between the battery assembly 20 and the housing assembly 10, and effectively prevents the noise generated by the relative movement of the battery assembly 20 and the housing assembly 10 during operation of the earphone 100, thereby effectively improving the sound quality of the earphone 100 and improving the listening effect of the user. In some embodiments, based on the above embodiment, while at least one side of the first limiting portion 1211 parallel to the first preset assembly direction Z1 abuts against a side of the limiting protrusion parallel to the first preset assembly direction Z1, the first limiting portion 1211 extends in the direction perpendicular to the first preset assembly direction Z1 to the peripheral wall surface 21 of the battery assembly 20 and abuts against the peripheral wall surface 21. Accordingly, the first limiting portion 1211 is not only configured to limit the rotation of the battery assembly 20 around the first preset assembly direction Z1 in the plane perpendicular to the first preset assembly direction Z1, but also plays a certain limiting role in the movement of the battery assembly 20 relative to the housing assembly 10 in the plane perpendicular to the first preset assembly direction Z1, thereby further improving the stability of the connection between the battery assembly 20 and the housing assembly 10.

In some embodiments, referring to FIG. 3, FIG. 4, and FIG. 5, the battery assembly 20 has a thickness direction (not shown in the figure), and an angle between the first preset assembly direction Z1 and the thickness direction of the battery assembly 20 may be in a range of 0°-5°. Specifically, the battery assembly 20 may have the thickness direction, and the angle between the first preset assembly direction Z1 and the thickness direction of the battery assembly 20 may be in a range of 0°-5°, so that a size of the housing assembly 10 in a second direction Y can be effectively reduced. In one embodiment, the first preset assembly direction Z1 and the thickness direction of the battery assembly 20 overlap, i.e., the angle between the first preset assembly direction Z1 and the thickness direction of the battery assembly 20 is set to 0°. Accordingly, the size of the housing assembly 10 in the second direction Y can be made smaller, thereby further reducing the size of the core module and improving the comfort of the user.

Referring to FIG. 3, FIG. 4, and FIG. 5, the bottom wall surface of the battery assembly 20 may abut against a first bottom wall of the first accommodation space 121a. The first bottom wall of the first accommodation space 121a refers to an inner wall surface of the second shell facing the user in the wearing state. A certain amount of adhesive may be laid on the first bottom wall for bonding the battery assembly 20. In some embodiments, the first limiting portion 1211 abuts against the peripheral wall surface 21 of the battery assembly 20 under the premise that the battery assembly 20 abuts against the first bottom wall. In this way, when the battery assembly 20 and the housing assembly 10 are fixedly connected by the adhesive such as glue, the first limiting portion 1211 may provide more bonding area between the housing assembly 10 and the battery assembly 20, thereby effectively improving the connection strength between the battery assembly 20 and the housing assembly 10, and preventing the battery assembly 20 from vibrating in the housing assembly 10.

In some embodiments, referring to FIG. 3, FIG. 4, and FIG. 5, the first accommodation space 121a includes a second limiting portion 1212, and the second limiting portion 1212 is configured to limit movement of the battery assembly 20 along a radial direction of the battery assembly 20. That is, the second limiting portion 1212 may be configured to limit displacement movement of the battery assembly 20 relative to the housing assembly 10 in the direction perpendicular to the first preset assembly direction Z1. It can also be understood that the second limiting portion 1212 can increase abutment points on the battery assembly 20 in the plane perpendicular to the first preset assembly direction Z1, thereby reducing the possibility of the movement of the battery assembly 20 relative to the housing assembly 10 in the plane perpendicular to the first preset assembly direction Z1, and effectively improving the stability of the connection between the battery assembly 20 and the housing assembly 10. In some embodiments, the second limiting portion 1212 is disposed at a position opposite to the first limiting portion 1211. The first limiting portion 1211 limits the rotation of the battery assembly 20 in a manner described in the above embodiments, and the second limiting portion 1212 abuts against the peripheral wall surface 21 of the battery assembly 20 at the position opposite to the first limiting portion 1211, thereby effectively limiting the movement of the battery assembly 20 relative to the housing assembly 10 in the direction perpendicular to the first preset assembly direction Z1.

Referring to FIG. 3, FIG. 4, and FIG. 5, the first accommodation space 121a may include a first inner sidewall (not shown in the figure), and the first inner sidewall may be parallel to an inner wall of the housing in the thickness direction of the core module. In some embodiments, the first inner sidewall is parallel to the first preset assembly direction Z1, where the second limiting portion 1212 and the first inner sidewall are an integral structure, or the second limiting portion 1212 is a limiting protrusion disposed on the first inner sidewall, or a combination of the integral structure and the limiting protrusion. Taking the second limiting portion 1212 and the first inner sidewall as an integral structure as an example, a portion of the first inner sidewall protrudes in the direction perpendicular to the first preset assembly direction Z1 to form the second limiting portion 1212, and the second limiting portion 1212 abuts against the peripheral wall surface 21 of the battery assembly 20, thereby limiting the movement of the battery assembly 20 relative to the housing assembly 10 in the direction perpendicular to the first preset assembly direction Z1. In some embodiments, a limiting protrusion is provided on the first inner sidewall as the second limiting portion 1212, which is not elaborated here.

In some embodiments, a positioning portion 1213 is disposed in the first accommodation space 121a; the positioning portion 1213 and the first limiting portion 1211 are spaced apart, the battery assembly 20 is provided with a positioning protrusion 22, and when being used for the battery assembly 20 is assembled along the first preset assembly direction Z1, the positioning protrusion 22 is disposed between the positioning portion 1213 and the first limiting portion 1211, so that the positioning portion 1213 and the first limiting portion 1211 perform assembly positioning on the battery assembly 20 when the battery assembly 20 is assembled in the first accommodation space 121a along the first preset assembly direction Z1.

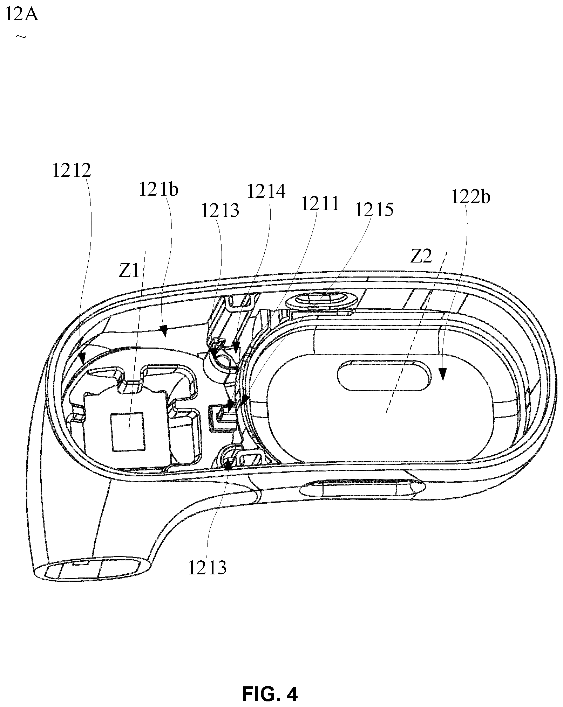

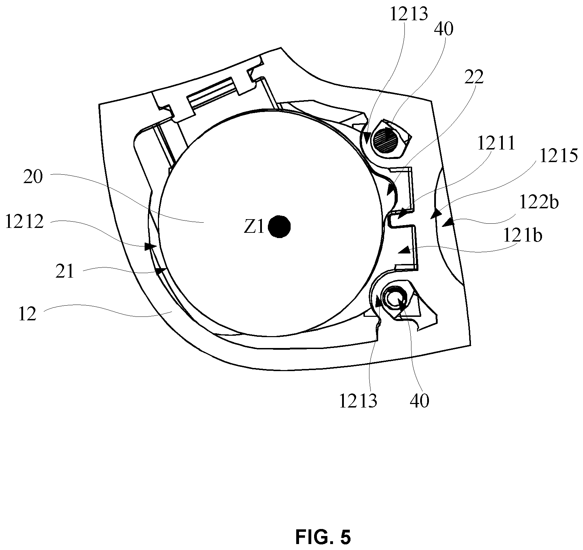

Specifically, referring to FIG. 4 and FIG. 5, the first accommodation space 121a may be provided with the positioning portion 1213, and the battery assembly 20 may be provided with the positioning protrusion 22, and the positioning protrusion 22 may be disposed on the peripheral wall surface 21 of the battery assembly 20. Merely by way of example, when the battery assembly 20 is assembled in the first accommodation space 121a of the housing assembly 10 along the first preset assembly direction Z1, a guide space along the first preset assembly direction Z1 is formed between the first limiting portion 1211 and the positioning portion 1213, and the positioning protrusion 22 is placed in the guide space. In other words, the battery assembly 20 can be quickly assembled in the first accommodation space 121a along the first preset assembly direction Z1 after performing positioning by the positioning protrusion 22 and the guide space, thereby effectively improving the assembly efficiency of the battery assembly 20. In some embodiments, the positioning protrusion 22 is used as the limiting protrusion to position the battery assembly 20 during assembly while limiting the movement of the battery assembly 20 in the housing assembly 10. In this way, the complexity of the battery assembly 20 can be reduced and the production cost can be reduced.

In some embodiments, the core module 1 includes an electrode member 40 electrically connected with the battery assembly 20. The electrode member 40 may be disposed in the positioning portion 1213 and extend from the first accommodation space 121a to outside of the housing assembly 10. Specifically, in one embodiment, the electrode member 40 is a component electrically connected with the battery assembly 20, and the positioning portion 1213 is provided with an electrode mounting portion connecting the first accommodation space 121a and an external space of the housing assembly 10, wherein the electrode member 40 is disposed in the electrode mounting portion and extends along the electrode mounting portion to the outside of the housing assembly 10, and the battery assembly 20 can be electrically connected through the electrode member 40 with an external charging case of the earphone 100 or other charging devices to realize a charging function. In one embodiment, a mounting hole for mounting the electrode member is provided on the positioning portion 1213, and a corresponding through hole is provided on the housing component 10, so that after the electrode member 40 is disposed in the mounting hole on the positioning portion 1213, the electrode member can directly extend out of the housing assembly 10 through the through hole to be electrically connected with a charging device such as the charging case. In this way, the processing difficulty of the housing assembly 10 can be reduced and the cost can be reduced.

Two positioning proportions 1213 may be provided. Referring to FIG. 5, the two positioning portions 1213 may be respectively disposed on two sides of the first limiting portion 1211, and the positioning protrusion 22 may be disposed between the first limiting portion 1211 and any one of the two positioning portions 1213. In some embodiments, two corresponding electrode members 40 may be provided, and the two electrode members 40 may be disposed on the two corresponding positioning portions 1213, respectively.

In some embodiments, the battery assembly 20 leads a wire for electrically connecting with other electronic components of the core module 1. The first accommodation space 121a may include a first bottom wall (not shown in the figure). The first bottom wall refers to an inner wall surface of the second shell facing the user in the wearing state. A lead wire groove 1214 may be disposed on the first bottom wall to accommodate the wire. Specifically, the first bottom wall may be provided with an abutting portion that abuts against the bottom wall surface of the battery assembly 20, and the lead wire groove 1214 to accommodate the wire. The lead wire groove 1214 is disposed on the first bottom wall to reasonably arrange the wire, thereby effectively reducing the space occupied by the wire, and effectively reducing the spatial volume of the housing assembly 10.

In some embodiments, the housing assembly 10 is provided with a partition wall 1215. The partition wall 1215 may be configured to separate the first accommodation space 121a and the second accommodation space 122a, and the first limiting portion 1211 may be convexly disposed on a side of the partition wall 1215 facing the first accommodation space 121a. Specifically, the partition wall 1215 may be configured to separate the first accommodation space 121a and the second accommodation space 122a from each other, so that the battery assembly 20 and the driving assembly 30 can be effectively separated, thereby preventing irreparable damage to the driving assembly 30 caused by leakage of battery fluid from the battery assembly 20, or the like.

In some embodiments, the battery assembly 20 and the driving assembly 30 are disposed in the second shell 12, the second shell 12 is provided with an open end, and a plurality of positioning grooves 1231 are provided at an edge close to the open end of the second shell 12. The first shell 11 may be configured to cover the second shell 12. An edge close to the first shell 11 may be provided with a plurality of positioning columns 112 corresponding to the plurality of positioning grooves 1231. At least a portion of the plurality of positioning columns 112 may be embedded in the plurality of positioning grooves 1231. Notches of the plurality of positioning grooves 1231 may be provided with first inclined wall surfaces 1232. The first inclined wall surfaces 1232 may be configured to guide the plurality of positioning columns 112 to be embedded into the plurality of positioning grooves 1231.

Specifically, referring to FIGs. 3-6, the first shell 11 may be provided with a third accommodation cavity 111, and the second shell 12 may be provided with a first sub-accommodation cavity 121b and a second sub-accommodation cavity 122b separated by the partition wall 1215. After the first shell 11 and the second shell 12 are buckled and connected, the third accommodation cavity 111 may be communicated with the first sub-accommodation cavity 121b and the second sub-accommodation cavity 122b, respectively, to form the first accommodation space 121a and the second accommodation space 122a, respectively, wherein the first accommodation space 121a and the second accommodation space 122a are collectively referred to as the accommodation space of the housing assembly 10. In this way, the second shell 12 may serve as an accommodation body for accommodating the battery assembly 20 and the driving assembly 30. The battery assembly 20 may be accommodated in the first sub-accommodation cavity 121b, and the driving assembly 30 may be accommodated in the second sub-accommodation cavity 122b. The first shell 11 may serve as a cover body to cover the second shell 12, so that the battery assembly 20 and the driving assembly 30 are respectively enclosed in the first accommodation space 121a and the second accommodation space 122a.

In some embodiments, the first shell 11 and the second shell 12 are positioned and assembled by the plurality of positioning columns 112 and the plurality of positioning grooves 1231, thereby effectively improving the assembly efficiency of the first shell 11 and the second shell 12. In addition, since the second shell 12 serves as a main body for accommodating the battery assembly 20 and the driving assembly 30, it is not convenient to move after the battery assembly 20 and the driving assembly 30 are assembled. Accordingly, when the first shell 11 and the second shell 12 are assembled, the second shell 12 remains as still as possible (e.g., the second shell 12 provided with the battery assembly 20 and the driving assembly 30 is fixed by a positioning base), and then the first shell 11 covers the second shell 12 from top to bottom along the direction of gravity to complete the assembly. The plurality of positioning grooves 1231 may be disposed on the second shell 12, and the plurality of positioning columns 112 may be disposed on the first shell 11, so that when the first shell 11 and the second shell 12 are assembled, the plurality of positioning grooves 1231 are located below the plurality of positioning columns 112, and an assembler can more easily complete the alignment of the plurality of positioning columns 112 and the plurality of positioning grooves 1231. In addition, the notches of the plurality of positioning grooves 1231 may be provided with the first inclined wall surfaces 1232, and the first inclined wall surfaces 1232 may be configured to guide the plurality of positioning columns 112 to be embedded into the plurality of positioning grooves 112, which can effectively improve the smoothness of the plurality of positioning columns 112 being embedded into the plurality of positioning groove 1231, thereby effectively improving the assembly efficiency of the first shell 11 and the second shell 12. In this way, the second shell 12 provided with the battery assembly 20 and the driving assembly 30 does not need to be significantly adjusted, which effectively ensures the overall assembly accuracy of the earphone 100 and the stability of the assembly of the battery assembly 20 and the driving assembly 30.

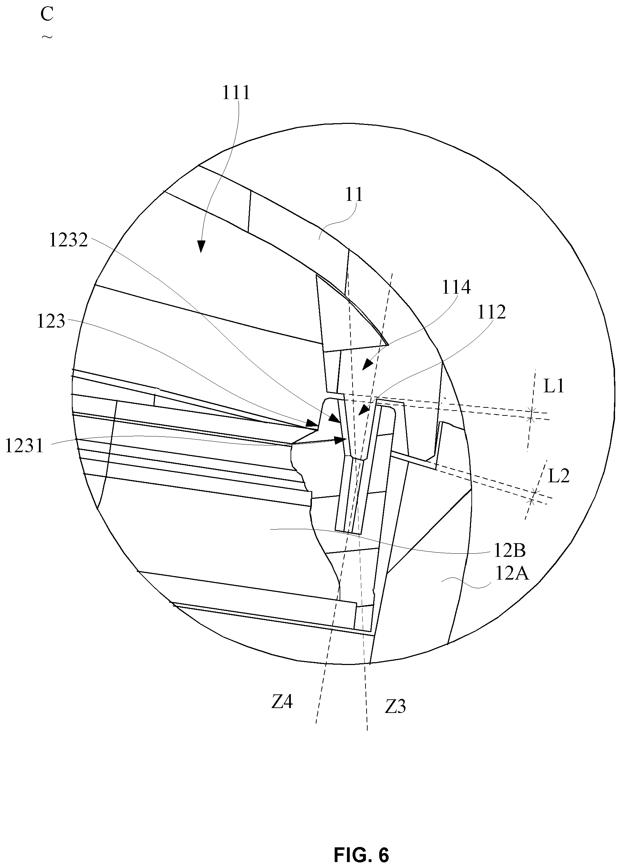

In some embodiments, the plurality of positioning columns 112 are configured to be formed along a first demolding direction Z3 of the first shell 11. The core module 1 may comprise a circuit board 50 accommodated in the accommodation space, and the first demolding direction Z3 may be perpendicular to a plane where the circuit board 50 is located. In other words, an axis of the plurality of positioning columns 112 may be parallel to the first demolding direction Z3, i.e., the axis of the plurality of positioning column 112 may be perpendicular to the plane where the circuit board 50 is located. Specifically, referring to FIG. 3 and FIG. 6, the first demolding direction Z3 is a direction of demolding of the first shell 11 during processing. Setting a forming direction of the plurality of positioning columns 112 to be the same as the demolding direction of the first shell 11 effectively reduces the molding process of the first shell 11, and reduces the process difficulty, thereby effectively simplifying the structure of the first shell 11 and effectively improving the molding efficiency of the first shell 11. Further, the circuit board 50 may be a control circuit element of the earphone 100 and configured to be provided between the first shell 11 and the second shell 12. That is, the circuit board 50 may be located in the accommodation space to cross the first accommodation space 121a and the second accommodation space 122a. The circuit board 50 may be fixedly connected with the first shell 11, and the plane where the circuit board 50 is located may be perpendicular to the first demolding direction Z3. In this way, the spatial volume occupied by the circuit board 50 in the second direction Y (wherein the first direction X, the first demolding direction Z3, and the second direction Y are located in the same plane, and the first direction X and the second direction Y are perpendicular to each other) is effectively reduced, thereby effectively reducing the overall size of the housing assembly 10 along the second direction Y, reducing the volume of the earphone 100, and improving the wearing comfort of the user.

In some embodiments, the first shell 11 is provided with hot melt columns 113, and the hot melt columns 113 are integrally formed with the first shell 11 along the first demolding direction Z3. The hot melt columns 113 may be configured to fix the circuit board 50. Specifically, referring to FIG. 3, the circuit board 50 may be fixedly connected with the first shell 11 through the hot melt columns 113. The hot melt columns 113 may be formed along the first demolding direction Z3, which can effectively reduce the molding process of the first shell 11, thereby effectively improving the molding efficiency of the first shell 11.

In some embodiments, the first preset assembly direction Z1 and the second preset assembly direction Z2 are set at an acute angle; an angle between the first demolding direction Z3 and the first preset assembly direction Z1 is in the range of 0°-5°. Specifically, referring to the present disclosure above, the battery assembly 20 may be accommodated in the first accommodation space 121a along the first preset assembly direction Z1, and the driving assembly 30 may be accommodated in the second accommodation space 122a along the second preset assembly direction Z2. A relationship between the first preset assembly direction Z1 and the second preset assembly direction Z2 is as described above, which is not repeated here. In some embodiments, the first preset assembly direction Z1 is parallel to the first demolding direction Z3, i.e., the angle between the first demolding direction Z3 and the first preset assembly direction Z1 is 0°. In this way, the overall demolding structure of the housing assembly 10 conforms to a combination relationship of the preset assembly directions (e.g., the first preset assembly direction Z1 and the second preset assembly direction Z2) of the battery assembly 20 and the driving assembly 30 as described above, thereby effectively reducing the overall structural size of the housing assembly 10. The angle range between the first demolding direction Z3 and the first preset assembly direction Z1 may be in a range of 0°-5°, which can also achieve the above effect.

In some embodiments, as described above, the second shell 12 is provided with the first sub-accommodation cavity 121b and the second sub-accommodation cavity 122b, the battery assembly 20 is accommodated in the first sub-accommodation cavity 121b, and the driving assembly 30 is accommodated in the second sub-accommodation cavity 122b. Further, the circuit board 50 may cross the first sub-accommodation cavity 121b and the second sub-accommodation cavity 122b. In this way, a projection of the circuit board 50 along a direction of a normal line of a main surface of the circuit board 50 may be configured to cover at least part of the driving assembly 30 and the battery assembly 20 simultaneously, which can make full use of the space inside the earphone 100, making the earphone 100 compact, thereby reducing the volume of the earphone 100 and making it easier for users to wear.

Further, the plurality of positioning grooves 1231 may be configured to be formed along a second demolding direction Z4 of the second shell 12. The first demolding direction Z3 and the second demolding direction Z4 may be set at an acute angle, and the acute angle may be in a range of 0°-10°. Specifically, referring to FIGs. 3-6, the first preset assembly direction Z1 may be parallel to the first demolding direction Z3, and the second preset assembly direction Z2 may be parallel to the second demolding direction Z4. In other words, the second preset assembly direction Z2 may coincide with the second demolding direction Z4, which can reduce the molding process of the second shell 12. The first demolding direction Z3 and the second demolding direction Z4 may be set at an acute angle, so that the overall demolding structure of the housing assembly 10 conforms to the combination relationship of the preset assembly directions (e.g., the first preset assembly direction Z1 and the second preset assembly direction Z2) of the battery assembly 20 and the driving assembly 30 as described above, thereby effectively reducing the overall structural size of the housing assembly 10.

In some embodiments, groove walls of the plurality of positioning grooves 1231 include the first inclined wall surfaces 1232 which are inclined compared to the second demolding direction Z4 and are biased toward the first demolding direction Z3. The first inclined wall surfaces 1232 may be configured to guide the plurality of positioning columns 112 to be embedded into the plurality of positioning grooves 1231. Specifically, referring to FIG. 6, the positioning grooves 1231 may be provided with the first inclined wall surfaces 1232. The first inclined wall surfaces 1232 may be inclined compared to the second demolding direction Z4 and biased toward the first demolding direction Z3, and an inclination angle of the first inclined wall surfaces 1232 relative to the second demolding direction Z4 may be the same as the angle between the first demolding direction Z3 and the second demolding direction Z4. In this way, the first inclined wall surfaces 1232 can effectively guide the plurality of positioning columns 112 to be embedded into the plurality of positioning grooves 1231.

In some embodiments, the second shell 12 is integrally formed, and the plurality of positioning grooves 1231 are formed at the edge of the open end of the second shell 12, so that the assembly process of the second shell 12 can be reduced and the assembly efficiency can be improved. In some embodiments, the second shell 12 includes a shell body 12A and a bracket 12B. The bracket 12B and the shell body 12A may be separately formed and assembled. The shell body 12A may be provided with the first sub-accommodation space 121b and the second sub-accommodation space 122b. The bracket 12B may be assembled in the second sub-accommodation space 122b for supporting and assembling the driving assembly 30. A portion of the positioning grooves 1231 may be disposed on the shell body 12A, and the other portion of the positioning grooves 1231 may be disposed on the bracket 12B, so as to facilitate flexible adjustment when the first shell 11 and the second shell are buckled, and improve the accuracy when the first shell 11 and the second shell 12 are buckled.

In some embodiments, the first shell 11 is provided with a first support platform 114, and the plurality of positioning columns 112 are disposed on the first support platform 114 and extend outward from a bottom surface of the first support platform 114. The second shell 12 may be provided with a second support platform 123, and the plurality of positioning grooves 1231 may be disposed on the second support platform 123 and form the notches on a top surface of the second support platform 123. For example, when the first shell 11 and the second shell 12 are buckled, and at least a portion of the plurality of positioning columns 112 are embedded into the plurality of positioning grooves 1231, a first gap L1 is formed between the bottom surface of the first support platform 114 and the top surface of the second support platform 123, in this case, a second gap L2 is formed between edges of the first shell 11 and the second shell 12 which are buckled with each other. A minimum gap height of the first gap L1 may be less than a minimum gap height of the second gap L2. The second gap L2 may be configured to accommodate a fixing adhesive. By setting the minimum gap height of the first gap L1 to be less than the minimum gap height of the second gap L2, after the first shell 11 and the second shell 12 are assembled in place, the second gap L2 still has sufficient height to accommodate the adhesive such as glue, thereby effectively ensuring the effective sealed connection between the edges of the first shell 11 and the second shell 12.

In some embodiments, a minimum gap distance of the first gap L1 is in a range of 0.02-0.07 mm, and a minimum gap distance of the second gap L2 is in a range of 0.08-0.12 mm.

The above descriptions are only some embodiments of the present disclosure, and do not limit the protection scope of the present disclosure. Any equivalent device or equivalent process transformation made using the contents of the specification and the drawings of the present disclosure, or directly or indirectly used in other related technical fields, are also included in the patent protection scope of the present disclosure.

## Claims

1. A core module, comprising:
a housing provided with a first accommodation space and a second accommodation space,
a battery assembly accommodated in the first accommodation space along a first preset assembly direction; and
a driving assembly accommodated in the second accommodation space along a second preset assembly direction, wherein
the first preset assembly direction and the second preset assembly direction are provided at an acute angle, a first limiting portion is disposed in the first accommodation space, a projection of the first limiting portion on a cross section perpendicular to the first preset assembly direction does not overlap with a projection of the battery assembly on the cross section perpendicular to the first preset assembly direction, and the first limiting portion is configured to limit a position of the battery assembly.

2. The core module of claim 1, wherein the first limiting portion is configured to stop the battery assembly at least in a direction perpendicular to the first preset assembly direction to limit rotation of the battery assembly around the first preset assembly direction.

3. The core module of claim 1 or 2, wherein the battery assembly has a thickness direction, and an angle between the first preset assembly direction and the thickness direction of the battery assembly is in a range of 0°-5°.

4. The core module of claim 3, wherein the battery assembly includes a top wall surface and a bottom wall surface which are spaced apart along the thickness direction and a peripheral wall surface connecting the top wall surface and the bottom wall surface, and the first limiting portion is configured to abut against the peripheral wall surface of the battery assembly for stopping.

5. The core module of claim 1 or 2, wherein the first accommodation space includes a second limiting portion, and the second limiting portion is configured to limit movement of the battery assembly along a radial direction of the battery assembly.

6. The core module of claim 5, wherein the first accommodation space includes a first inner sidewall, wherein
the second limiting portion is a portion of the first inner sidewall, and/or
the second limiting portion is a limiting protrusion disposed on the first inner sidewall.

7. The core module of claim 1, wherein
a positioning portion is disposed in the first accommodation space, the positioning portion and the first limiting portion are spaced apart, the battery assembly is provided with a positioning protrusion, and the positioning protrusion is disposed between the positioning portion and the first limiting portion along the first preset assembly direction, so that the positioning portion and the first limiting portion perform assembly positioning on the battery assembly when the battery assembly is assembled in the first accommodation space along the first preset assembly direction.

8. The core module of claim 7, wherein
the core module includes an electrode member electrically connected with the battery assembly, the electrode member is disposed in the positioning portion and extends from the first accommodation space to outside of the housing.

9. The core module of claim 8, wherein
two positioning portions are provided, and the two positioning portions are respectively disposed on two sides of the first limiting portion, and the positioning protrusion is disposed between the first limiting portion and any one of the two positioning portions.

10. The core module of claim 8 or 9, wherein
the battery assembly leads a wire, the first accommodation space includes a first bottom wall, and a lead wire groove is disposed on the first bottom wall to accommodate the wire.

11. The core module of claim 1, wherein
the housing is provided with a partition wall, the partition wall is configured to separate the first accommodation space and the second accommodation space, and the first limiting portion is convexly disposed on a side of the partition wall facing the first accommodation space.

12. The core module of claim 1, wherein
the housing includes a first shell and a second shell, the second shell is provided with an open end, the first shell and the second shell are connected with each other and the first shell covers the open end to form the first accommodation space and the second accommodation space,
the second shell is provided with a plurality of positioning grooves, the first shell is provided with a plurality of positioning columns corresponding to the plurality of positioning grooves, at least a portion of the plurality of positioning columns are embedded in the plurality of positioning grooves,
notches of the plurality of positioning grooves are provided with first inclined wall surfaces, and the first inclined wall surfaces are configured to guide the plurality of positioning columns to be embedded into the plurality of positioning grooves.

13. The core module of claim 12, wherein the plurality of positioning columns are configured to be formed along a first demolding direction of the first shell, the core module comprises a circuit board, and the first demolding direction is perpendicular to a plane where the circuit board is located.

14. The core module of claim 13, wherein an angle between the first demolding direction and the first preset assembly direction is in a range of 0°-5°.

15. The core module of claim 13, wherein
the first inclined wall surfaces are inclined compared to a second demolding direction and are biased toward the first demolding direction.

16. The core module of claim 12, wherein
the first shell is provided with a first support platform, the plurality of positioning columns are disposed on the first support platform and extend outward from a bottom surface of the first support platform,
the second shell is provided with a second support platform, the plurality of positioning grooves are disposed on the second support platform and form the notches on a top surface of the second support platform,
when the at least a portion of the plurality of positioning columns are embedded in the plurality of positioning grooves, a first gap is formed between the bottom surface of the first support platform and the top surface of the second support platform,
a second gap is provided between edges of the first shell and the second shell which are buckled with each other,
a minimum gap height of the first gap is less than a minimum gap height of the second gap, and
the second gap being configured to accommodate a fixing adhesive.

17. The core module of claim 16, wherein
a minimum gap distance of the first gap is in a range of 0.02-0.07 mm, and a minimum gap distance of the second gap is in a range of 0.08-0.12 mm.

18. An earphone, comprising:
the core module of any one of claims 1-17; and
an ear hook configured to be connected with the housing to make the core module be worn near an ear canal of a user but not block the ear canal.
